# FASCICULE DE BREVET EUROPEEN

(11) **EP 1 750 840 B1**
(45) Date de publication et mention de la délivrance du brevet: **23.04.2008**
(21) Numéro de dépôt: 05775290.9
(22) Date de dépôt: 06.06.2005
(51) Int. Cl.: B01L 3/00, B01F 13/00, F04B 19/00

(54) **DISPOSITIF POUR DESORPTION PAR RAYONNEMENT LASER INCORPORANT UNE MANIPULATION DE L'ECHANTILLON LIQUIDE SOUS FORME DE GOUTTES INDIVIDUELLES PERMETTANT LEUR TRAITEMENT CHIMIQUE ET BIOCHIMIQUE**
LASERSTRAHLUNGSDESORPTIONSGERÄT ZUR MANIPULATION EINER FLÜSSIGPROBE IN FORM VON EINZELTROPFEN ZUR ERMÖGLICHUNG IHRER CHEMISCHEN UND BIOLOGISCHEN BEHANDLUNG
LASER RADIATION DESORPTION DEVICE FOR MANIPULATING A LIQUID SAMPLE IN THE FORM OF INDIVIDUAL DROPS, THEREBY MAKING IT POSSIBLE TO CARRY OUT THE CHEMICAL AND BIOLOGICAL TREATMENT THEREOF

(30) Priorité: 04.06.2004 FR 0406081
(43) Date de publication de la demande: 14.02.2007
(73) Titulaire: UNIVERSITE DES SCIENCES ET TECHNOLOGIES DE LILLE, 59655 Villeneuve-d'Ascq Cedex (FR); CENTRE NATIONAL DE LA RECHERCHE SCIENTIFIQUE (CNRS), 75794 Paris Cedex 16 (FR); Sanofi-Aventis, 75013 Paris Cedex (FR)
(72) Inventeur: FOURRIER, Jean-Christophe, F-71300 Montceau-les-Mines (FR); CARON, François, F-59500 DOUAI (FR); TABOURIER, Pierre, F-62100 CALAIS (FR); DRUON, Christian, F-59650 VILLENEUVE D'ASCQ (FR); LOYAUX, Denis, F-31450 BELBEZE DU LAURAGAIS (FR); LEPESANT, Jean-Pierre, Chemin des Morts, F-13122 VENTABREN (FR); ROLANDO, Christian, F-92160 ANTONY (FR)
(74) Mandataire: Hennion, Jean-Claude
(86) Numéro de dépôt international: PCT/FR2005/001384
(87) Numéro de publication internationale: WO 2006/003292

(56) Documents cités:
- WO-A-03/045556
- WO-A-20/05019875
- US-A1- 2003 205 632
- US-A1- 2004 055 891
- US-B1- 6 565 727
- CHIU D T: "Micro- and nano-scale chemical analysis of individual sub-cellular compartments" TRAC, TRENDS IN ANALYTICAL CHEMISTRY, ANALYTICAL CHEMISTRY. CAMBRIDGE, GB, vol. 22, no. 8, septembre 2003 (2003-09), pages 528-536, XP004480052 ISSN: 0165-9936

## Description

La présente invention concerne un système intégré d'analyse microfluidique d'un échantillon de liquide, qui trouve notamment, mais pas uniquement, son application pour l'analyse par désorption par rayonnement laser, incorporant une manipulation de l'échantillon liquide sous forme de gouttes individuelles permettant leur traitement chimique et biochimique.

La désorption par le rayonnement laser permet la vaporisation de substance présente sur une surface. Cet effet se combine avec l'ionisation des molécules présentes à la surface. Ce phénomène a été exploité en spectrométrie de masse sous le nom de MALDI (Matrix assisted Laser Desorption Ionization) dans lequel l'énergie du faisceau laser est emmagasinée puis restituée par la matrice qui est le plus souvent organique mais qui peut contenir aussi des nanoparticules dont l'absorption est dans la gamme de la longueur d'onde du faisceau laser.

Pour conduire à des résultats satisfaisants en spectrométrie de masse MALDI l'échantillon, doit contenir une quantité très minime de sels inorganiques, typiquement une concentration de l'ordre de moins de un pour mille. Typiquement l'échantillon est donc dessalé avant son analyse par spectrométrie de masse MALDI ce qui conduit à des étapes supplémentaires et réduit la sensibilité de la méthode. Les techniques les plus couramment utilisées sont le dessalage sur des colonnes hydrophobes de type chaîne alkyle greffée. Des dessalages spécifiques utilisant des résines cationiques ou anioniques peuvent également être mises en oeuvre.

Plus généralement, on utilisera par la suite indifféremment les adjectifs mouillant ou hydrophile pour une mouillabilité vis-à-vis d'un quelconque liquide, et non mouillant ou hydrophobe pour une non mouillabilité vis-à-vis d'un quelconque liquide.

Par ailleurs la plupart des échantillons biologiques sont complexes et comprennent des centaines voir des milliers de molécules différentes. Typiquement un digestat trypsique des protéines contenues dans un tissu contient dix mille à cent mille peptides différents. C'est pourquoi ces échantillons subissent un fractionnement préalable en utilisant des colonnes d'affinité comme dans la technologie ICAT (Isotope Coded Affinity Tags) qui en plus de sa complexité détériore considérablement la sensibilité de la méthode. Ces échantillons biologiques sont de plus disponibles en très faible quantité : il est ainsi nécessaire de disposer d'un gramme de biopsie pour pratiquer une analyse protéomique ce qui rend ces analyses non réalisables sur des prélèvements humains.

La mise en oeuvre de la technique MALDI se fait le plus souvent à partir d'une surface métallique. Afin de minimiser les inconvénients mentionnés précédemment divers agencements de ces surfaces métalliques ont été décrites. Les premières solutions ont eu pour objectif d'améliorer la sensibilité. Tout d'abord des surfaces ou seules de petites zones sont métalliques, ce qui conduit à une concentration locale de l'échantillon. Pour supprimer les sels, des surfaces réalisées à partir d'un polymère de type brosse ce qui permet un dessalage in situ de l'échantillon. Pour réaliser le fractionnement, des surfaces de type résine cationique ou anionique qui permettent l'immobilisation d'une seule famille de composé de polarité opposée. Et enfin des surfaces greffées par des composés biologiques (biotine, avidine, anticorps) pour permettre la purification par affinité de mélanges complexes.

Toutes ces surfaces sont statiques et ne comportent aucun système fluidique permettant le déplacement et le traitement de l'échantillon sur la plaque. Le dépôt est réalisé soit de manière manuelle soit par un robot comportant une tête d'aspiration-dépôt de liquide externe.

La microfluidique est actuellement en plein essor et tente d'apporter des solutions innovantes, avec par exemple de nouvelles méthodes d'analyse, dans le domaine de la biologie, de la chimie analytique et du génie chimique. La réduction de la taille des systèmes engendrent de nombreux aspects positifs comme la diminution des volumes, celle des temps de réactions ou des temps d'échange plus courts, et une intégration de plusieurs modules avec des fonctionnalités différentes, comme des modules de transport, de traitement, d'analyse, sur un même wafer de silicium par exemple.

Deux types de déplacement fluidique sont possibles : le pompage d'un flux continu et le déplacement de microvolumes calibrés de liquide. Le pompage de microvolumes calibrés nécessite des volumes moins importants de liquide que le pompage à flux continu et permet un contrôle plus facile du débit. Par un contrôle des constantes de temps qui permettent par exemple le mélange de liquides, sont ainsi plus facilement réalisables. Plusieurs modes de pompages de ce type sont décrits dans la littérature utilisant des pompages par action pneumatique ou par ondes acoustiques de surfaces, des pompages à effet diélectrophorétique, des pompages par électromouillage et électromouillage sur diélectrique. Ce dernier mode de pompage fait appel à une réalisation technologique simple, permet le contrôle du débit et la circulation du liquide dans un réseau de microcanaux.

Actuellement, les dispositifs de déplacement utilisant le principe de l'électromouillage (electrowetting en anglais) nécessitent deux substrats en vis-à-vis ou un seul substrat (Creating, Transporting, Cutting, and Merging Liquid Droplets by Électromouillage-Based Actuation for Digital Microfluidic Circuits" Sung Kwon Cho, Hyejin Moon, and Chang-Jin Kim, Journal of Microelectromechanical Systems, VOL. 12, NO. 1, Feb. 2003, pp. 70-80).

Le système avec deux substrats en vis-à-vis réclament des électrodes interdigitées sur au moins un des 2 substrats, au moins une couche isolante constituée d'oxydes inorganiques de non-métaux métaux, de métaux de transition, de polymères ou d'une combinaison de ces différentes substances sur l'un des deux substrats et une couche hydrophobe sur chaque substrat. Le système avec un seul substrat nécessite des électrodes interdigitées, une couche isolante constituée d'oxydes inorganiques de non-métaux métaux, de métaux de transition, de polymères ou d'une combinaison de ces différentes substances une couche hydrophobe et une ligne de masse ou non. La couche hydrophobe est la clé du déplacement, sans celle-ci, le déplacement est impossible comme il est décrit dans l'article cité (Electrowetting-based microfluidic devices : design issues , C.Y. Chen, E.F. Fabrizio, A. Nadim and J.D. Sterling, Summer Bioengineering Conference 2003, pp. 1241-1242).

La couche hydrophobe est un matériau ayant une faible énergie de surface et une excellente résistance chimique. De ce fait, il est très difficile d'effectuer sur une couche hydrophobe un traitement de surface chimique local, des dépôts ou des greffages sans modifier et/ou dégrader l'intégralité de la surface de cette couche hydrophobe ; et ceci diminue ou annule l'efficacité de l'électromouillage pour le déplacement de liquide. Ainsi, l'utilisation de ce système recouvert d'une couche hydrophobe se limite à priori au seul déplacement de liquide.

Ainsi, pour avoir un système qui permet, par exemple de traiter des échantillons biologiques il faut des zones fonctionnalisées qui interagiront avec le liquide. Or La couche hydrophobe interdit toute fonctionnalisation préalable de zones sur lesquelles le liquide serait en contact. Pour remédier à ceci, la solution proposée consiste à créer des ouvertures hydrophiles dans le matériau hydrophobe. Ces ouvertures hydrophiles encore appelées zones ouvertes ou ouvertures peuvent alors être traité chimiquement et le liquide peut interagir avec cette surface.

La présente invention concerne des dispositifs pour désorption par rayonnement laser incorporant une manipulation de l'échantillon liquide sous forme de gouttes individuelles permettant leur traitement chimique et biochimique.

Le dispositif pour désorption par rayonnement LASER comporte au moins un plot de chargement de l'échantillon liquide, au moins une piste de transport composée d'électrodes interdigitées, au moins une zone de traitement chimique ou biochimique et un système d'aiguillage vers au moins un plot conducteur où une désorption par rayonnement LASER peut être réalisée.

L'invention se présente sous la forme d'un substrat isolant sur lequel reposent des électrodes interdigitées, isolées des échantillons déplacés par une couche supérieure isolante et fonctionnalisable, d'oxydes inorganiques de non-métaux, de métaux, de métaux de transition ou de polymères ou d'une combinaison de ces différentes substances. Une couche non mouillante, laissant apparaître des zones mouillantes, est ensuite déposée. Cette couche dite partiellement mouillante laisse apparaître la couche isolante fonctionnalisable. Après traitement, ces ouvertures dans la couche non mouillante constituent les zones fonctionnalisées du module de traitement.

Le système peut se présenter sous la forme de deux substrats en vis à vis. Sur un des substrats repose une piste de transport des échantillons ou réactifs. Sur le second substrat repose les zones fonctionnalisées. L'ensemble des deux substrats est séparé par un espace destiné à être rempli d'un fluide électriquement isolant et non miscible vis à vis des liquides transportés.

En plus d'un module de traitement, le système peut comprendre :
- un module qui permet l'introduction d'un échantillon biologique ainsi que des liquides nécessaires pour l'analyse (solution de rinçage...),
- un module qui permet de fractionner les liquides en plusieurs gouttes,
- un ou des modules d'interaction biochimique. Exemple pour l'analyse des protéines : module d'affinité, de digestion, de dessalage,
- un module de transition entre la zone de traitement et la zone d'analyse
- un module d'analyse qui par exemple place les échantillons à analyser sur des plots où une matrice peut être ajouté et sur lesquels une analyse par spectrométrie de masse de type MALDI est possible ou encore par détection optique ou fluorescence.

Plus généralement l'invention se rapporte à un système intégré d'analyse microfluidique d'un échantillon de liquide comprenant au moins un moyen (100) de préparation de l'échantillon de liquide, ledit moyen (100) de préparation comprenant un moyen (101) de déplacement pour l'introduction dudit échantillon et de réactifs puis leur migration vers au moins un moyen (200) de traitement chimique ou biochimique de gouttes dudit échantillon de liquide, ledit moyen (200) de traitement comprenant un moyen (201) de déplacement desdites gouttes dudit échantillon puis leur migration vers au moins un moyen (300) d'analyse desdites gouttes dudit échantillon de liquide, caractérisé en ce que le moyen d'analyse (300) est un moyen d'analyse par désorption par rayonnement laser et comprend d'une part un moyen (301) de déplacement des gouttes de l'échantillon et d'autre part au moins un moyen d'aiguillage des gouttes vers des plots d'analyse indépendants.

Le moyen (100) de préparation de l'échantillon de liquide peut comprendre au moins un quai de chargement de liquide.

Le moyen (100) de préparation peut comprendre au moins une zone (102) pour le dépôt de liquide.

Au moins un des moyens (101,201,301) de déplacement peut comprendre au moins un plot conducteur, recouvert d'une couche partiellement mouillante comportant au moins une zone mouillante en vis-à-vis dudit plot conducteur.

Le système peut comprendre une couche isolante insérée entre le plot conducteur et la couche partiellement mouillante.

Les zones mouillantes sont éventuellement fonctionnalisées chimiquement ou biochimiquement.

Le moyen (201) de déplacement du moyen (200) de traitement chimique ou biochimique peut comprendre deux substrats en vis-à-vis, et/ou au moins un moyen de fractionnement d'une goutte en plusieurs, et/ou au moins un moyen d'élimination des réactifs en excès ou usagers.

Au moins un des moyens (101, 201, 301) de déplacement est de type déplacement par électromouillage sur diélectrique.

Les zones fonctionnalisées chimiquement ou biochimiquement sont des zones hydrophiles d'interaction avec le liquide déplacé.

Le moyen (300) d'analyse comprend un moyen d'analyse de type MALDI par désorption-ionisation par rayonnement laser, et/ou de type par détection optique.

L'invention se rapporte également à un dispositif (300) d'analyse d'un échantillon liquide par désorption par rayonnement laser, caractérisé en ce qu'il comprend un moyen (301) de déplacement des gouttes de l'échantillon, et au moins un moyen d'aiguillage des gouttes vers des plots d'analyse indépendants.

Eventuellement, le moyen (301) de déplacement, comprend au moins un plot conducteur, recouvert d'une couche partiellement mouillante comportant au moins une zone mouillante en vis-à-vis dudit plot conducteur.

De préférence, le dispositif comprend une couche isolante insérée entre ledit plot conducteur et ladite couche partiellement mouillante.

Eventuellement, les zones mouillantes sont fonctionnalisées chimiquement ou biochimiquement. Ces zones peuvent être des zones hydrophiles d'interaction avec le liquide déplacé.

De préférence encore, le moyen (301) de déplacement est de type déplacement par électromouillage sur diélectrique.

Le dispositif peut enfin éventuellement comprendre un moyen d'analyse de type MALDI par désorption-ionisation par rayonnement laser, et/ou de type par détection optique.

D'autres caractéristiques et avantages de l'invention apparaîtront plus clairement et de manière complète à la lecture de la description ci-après des variantes préférées de mise en oeuvre du procédé et de réalisation du dispositif, lesquelles sont données à titre d'exemples non limitatifs et en référence aux dessins annexés suivants :
- figures 1a à 1c : représente schématiquement un dispositif d'analyse d'échantillons biologiques avec cible MALDI intégrée,
- figure 2 : représente schématiquement un dispositif de déplacement d'une goutte entre 2 pistes,
- figure 3 : représente schématiquement un dispositif de déplacement d'une goutte entre 2 pistes avec des zones fonctionnalisées sur la piste supérieure,
- figure 4 : représente schématiquement un dispositif de déplacement d'une goutte sur une piste,
- figure 5 : représente schématiquement un dispositif d'analyse d'échantillons biologiques par spectrométrie de masse MALDI,
- figure 6 : représente schématiquement un dispositif d'analyse de protéines d'échantillons biologiques avec cible MALDI intégré avec 3 traitements biochimiques avant analyse (concentration, digestion et dessalage).

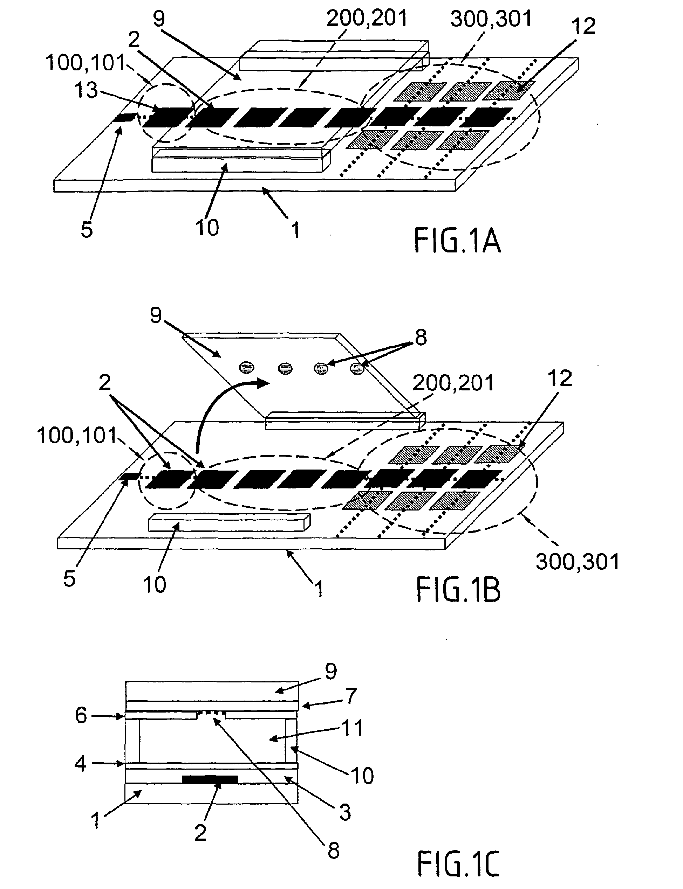

Les figures 1 a à 1c représentent schématiquement un dispositif d'analyse d'échantillons biologiques avec cible MALDI vues en perspective 1 a et 1b, et vue en coupe perpendiculaire au sens du déplacement de la goutte 1 c.

Dans ces figures 1 a à 1 c, le dispositif comprend une piste avec un substrat 1. Au dessus de ce substrat 1 se trouvent les électrodes interdigitées 2.

Sur ces électrodes 2, on trouve une couche diélectrique isolante 3, constituée par exemple d'oxydes ou de polymères. Sur cette couche électrique isolante 3 se trouve une couche non mouillante 4. Entre la couche 3 et la couche 4, une ligne conductrice 5 fait office de contre-électrode.

En vis à vis de la première piste est placée une deuxième piste formée d'une couche partiellement mouillante 6 elle-même recouverte d'une couche supérieure 7 sur laquelle des fonctions biochimiques 8 peuvent être greffées. La couche 7 est sur un substrat 9 qui peut être utilisé comme contre-électrode. L'utilisation de cales 10 permet de maintenir un espace 11 de déplacement destiné à être rempli d'un fluide électriquement isolant non miscible vis à vis de la goutte transportée. Sur ce substrat, les plots 12 sont conducteurs et permettent d'immobiliser les gouttes transportant le matériel à analyser avant dépôt de matrice pour l'analyse MALDI.

Sur le plot 13, les liquides (par exemple les gouttes d'échantillons, de réactifs, ...) sont déposés. Le liquide entre alors dans la zone de traitement chimique ou biochimique entre les substrats 1 et 9 et interagit avec les zones fonctionnalisées 8. Les plots de déplacement 2 permettent alors l'acheminement de chaque goutte individuelle (14) jusqu'à un des plots 12. Suit une étape de dépôt de matrice, une cristallisation et une analyse MALDI.

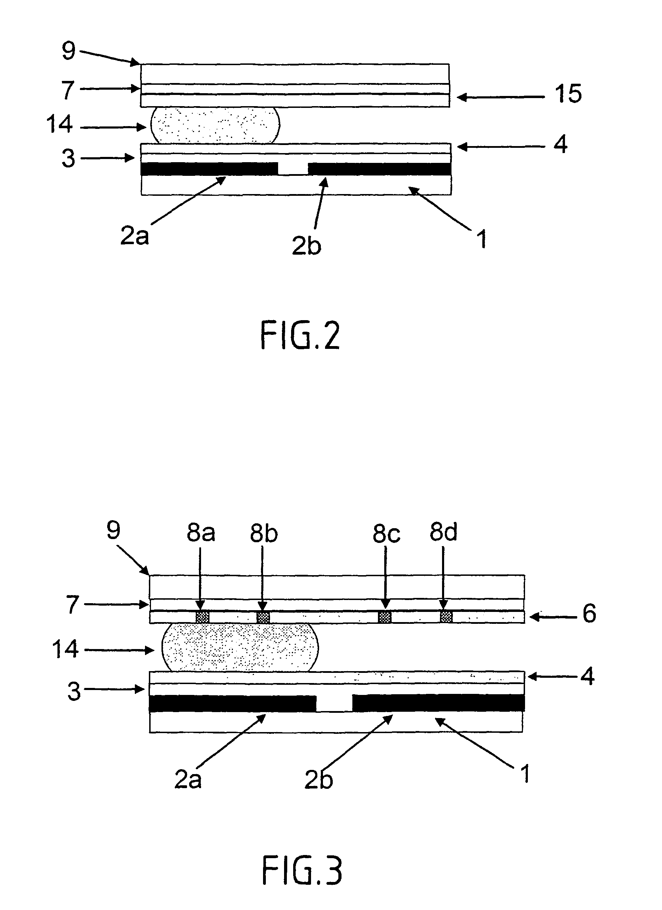

La figure 2 représente schématiquement un dispositif de déplacement d'une goutte entre 2 pistes vue en coupe dans le sens du déplacement. Le dispositif comprend une première piste constituée des couches 1, 2, 3, 4 et une seconde piste constituée des couches 7, d'un substrat 9 ainsi que d'une couche non mouillante 15. En mettant une différence de potentiel entre l'électrode 2b et le substrat 9, la goutte se confine entre l'électrode 2b et le substrat 9, et nous obtenons un déplacement de la goutte depuis l'électrode 2a à l'électrode 2b.

La figure 3 représente schématiquement un dispositif de déplacement d'une goutte 14 entre 2 pistes avec des zones fonctionnalisées sur la piste supérieure vue en coupe dans le sens du déplacement. Le dispositif comprend une première piste constituée des couches 1, 2, 3, 4 et une seconde piste constituée des couches 6, 7, d'un substrat 9 et des zones fonctionnalisées 8a à 8d. En mettant une différence de potentiel entre l'électrode 2b et le substrat 9, la goutte se confine entre l'électrode 2b et le substrat 9, et nous obtenons un déplacement de l'électrode 2a à l'électrode 2b. La goutte interagit alors avec la zone fonctionnalisée 8c et 8d.

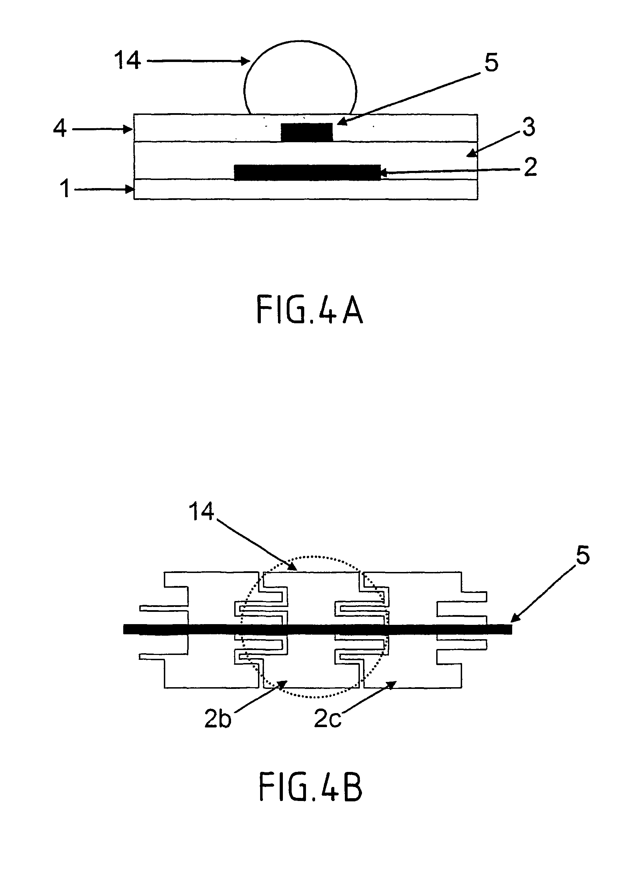

La figure 4 représente schématiquement un dispositif de déplacement d'une goutte sur une piste. La figure 4a est une vue en coupe perpendiculaire au sens du déplacement de la goutte et la figure 4b est une vue de dessus du dispositif. Le dispositif comprend une piste constituée des couches 1, 2, 3, 4 et 5. En mettant une différence de potentiel entre l'électrode 2c et la ligne 5, nous obtenons un déplacement de la goutte 14 de l'électrode 2b à l'électrode 2c.

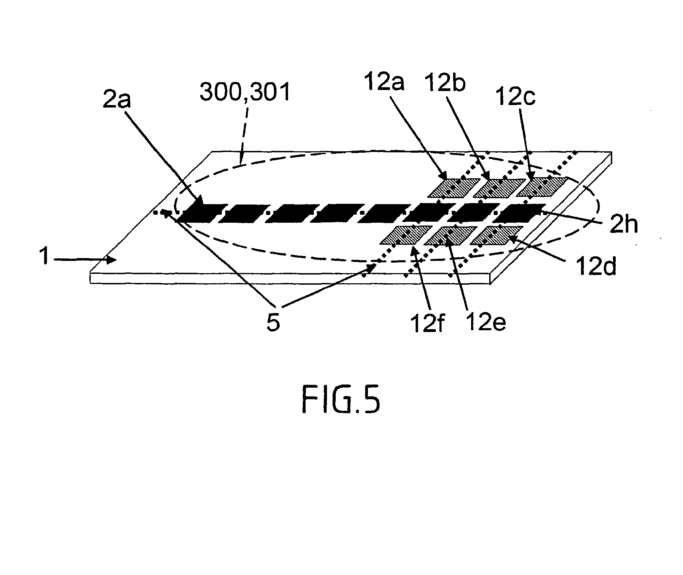

La figure 5 représente schématiquement et en perspective un dispositif d'analyse d'échantillons biologiques par spectrométrie de masse MALDI. En appliquant successivement des différences de potentiel entre les électrodes 2a à 2h et la ligne 5, nous pouvons déplacer la goutte 14 et l'immobiliser sur un des plots 12a à 12f. Suit une étape de dépôt de matrice, une cristallisation et une analyse MALDI.

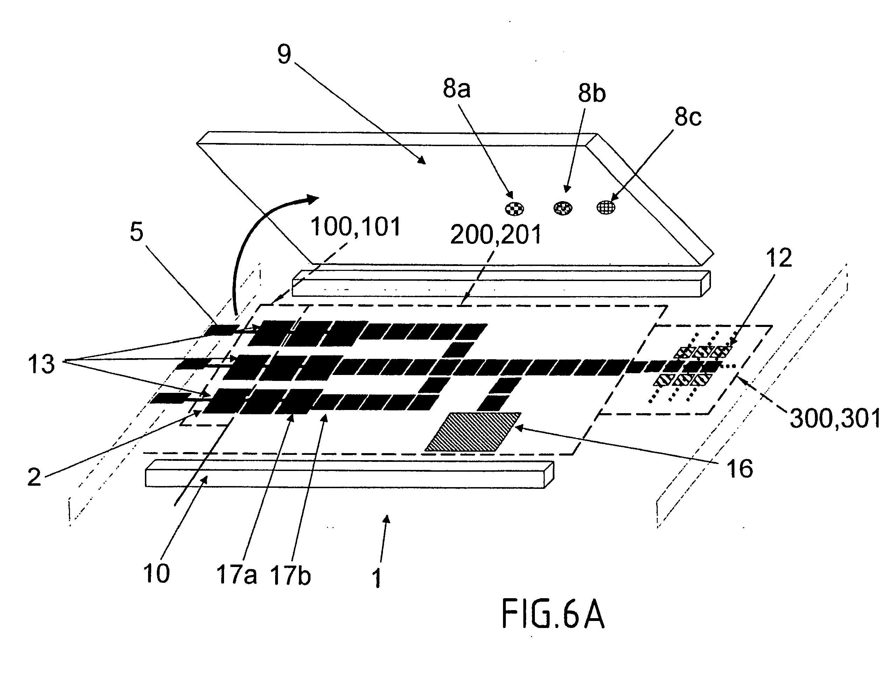

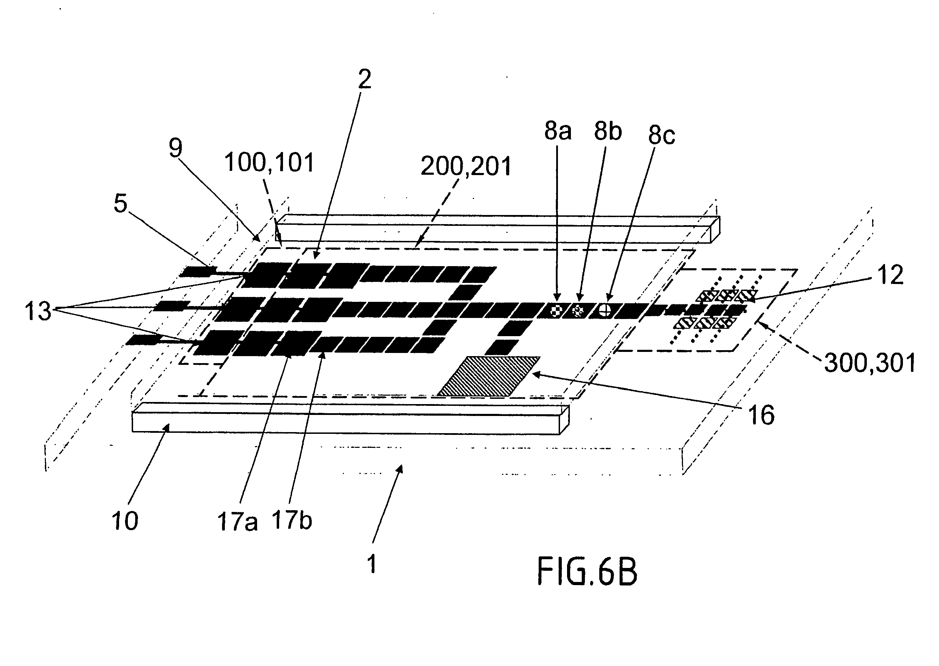

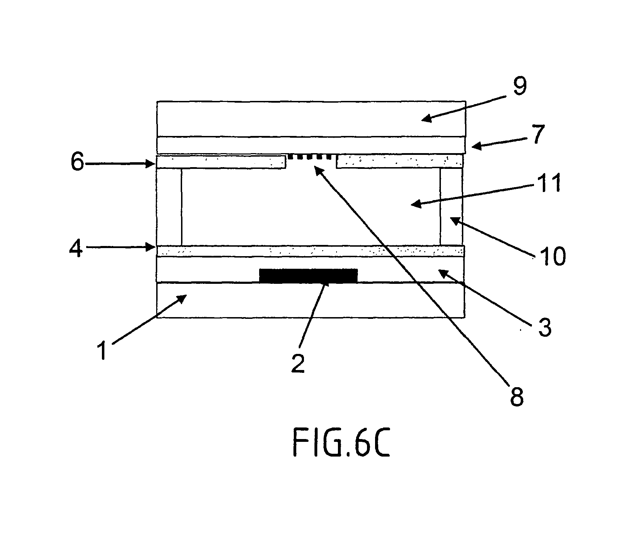

Les figures 6a à 6c représentent schématiquement un dispositif d'analyse de protéines d'échantillons biologiques avec cible MALDI intégrée avec 3 traitements chimique ou biochimiques avant analyse (concentration, digestion et dessalage) vues en perspective 6a et 6b, et vue en coupe perpendiculaire au sens du déplacement de la goutte 6c.

Le dispositif comprend une première piste constituée des couches 1, 2, 3, 4, 5, d'une seconde piste constituée des couches 6, 7, d'un substrat 9 et de cales 10. Ce dispositif comprend un plot 16 permettant l'élimination des réactifs en excès ou déjà utilisés, des plots 12 pour l'analyse MALDI et trois zones fonctionnalisées pour l'affinité 8a, pour la digestion 8b et pour le dessalage 8c.

Sur les plots 13, les liquides (par exemple les gouttes d'échantillons, de réactifs, de rinçage...) sont déposées. Le liquide entre alors dans la zone de traitement biochimique entre les substrats 1 et 9 grâce l'application d'une différence de potentiel. La transition entre les plots 17a et 17b permet de fractionner le liquide introduit en plusieurs gouttes. Les gouttes sont alors acheminées vers un premier plot d'affinité 8a où les protéines d'intérêt vont se fixer. Les gouttes sont alors conduites jusqu'au plot 16. Une solution de rinçage permet alors de rincer le plot 8a selon le même principe de déplacement que précédemment. Ensuite, une solution spécifique (comme un mélange tampon dénaturant) permet de libérer les molécules d'intérêt et les protéines sont amenées sur un plot 8b de digestion protéinique. Après l'étape de digestion, la goutte est acheminée sur le plot 8c de dessalage avant d'être conduite sur un des plots pour l'analyse de type MALDI.

Les exemples suivants illustrent la fonctionnalisation et l'usage des dispositifs décrits précédemment:

### Exemple 1. Réacteur d'affinité permettant le traitement d'échantillons biologiques.

Dans le dispositif, les zones non recouvertes par la couche hydrophobe vont subir un traitement de surface et les transformer en surfaces réactives par exemple en utilisant une surface support comportant des groupements amino (NH2) sur lesquels est greffée de la Streptavidine. Ainsi, nous immobilisons la goutte de liquide se déplaçant dans le chemin d'électrodes sur une zone traitée, et les molécules d'intérêt (protéines par exemple) qui ont une affinité pour les surfaces greffées vont se fixer sur ces surfaces. Quand la réaction chimique est terminée, la goutte poursuit son chemin dans le dispositif. Ensuite, le passage d'un mélange spécifique (par exemple un mélange tampon dénaturant) sur ces zones, libérera les molécules d'intérêt (avec par exemple destruction des interactions non covalentes) et les entraînera avec lui. Ce dispositif permet ainsi d'isoler des molécules d'intérêt.

### Exemple 2. Réacteur de digestion permettant le traitement d'échantillons biologiques.

Dans le dispositif, les zones non recouvertes par la couche hydrophobe subissent un traitement de surface qui les transforment en surfaces réactives par exemple en utilisant une surface support comportant des groupements amino (NH2) sur lesquels est greffé de la trypsine. Ainsi, nous immobilisons la goutte de liquide se déplaçant dans le chemin d'électrodes sur une zone traitée, et les molécules d'intérêt (protéines par exemple) réagissent avec les surfaces greffées qui coupent les molécules, pour obtenir par exemple des peptides dans le cas d'une digestion par la trypsine. Ensuite, la goutte poursuit son chemin dans le dispositif. Ce dispositif permet par exemple d'analyser des longues chaînes de molécules par découpage préalable au moyen d'enzymes spécifiques par spectrométrie de masse.

### Exemple 3. Traitement d'échantillons biologique : module de dessalage.

Dans le dispositif, les zones non recouvertes par la couche hydrophobe subissent un traitement de surface qui les transforme en surfaces réactives par exemple par greffage de chaînes hydrocarbonées de 18 carbones conduisant à l'équivalent d'une phase de chromatographie inverse dite C18. Ainsi, nous immobilisons la goutte de liquide se déplaçant dans le chemin d'électrodes sur une zone traitée, et les molécules d'intérêt (protéines par exemple) réagissent avec les surfaces greffées qui coupent les molécules. Ensuite, la goutte poursuit son chemin dans le dispositif. Ce dispositif permet par exemple d'effectuer un dessalage avant l'analyse par spectrométrie de masse MALDI.

## Revendications

1. Dispositif (300) d'analyse par désorption par rayonnement laser d'un échantillon liquide comprenant des gouttes, comprenant un moyen (301) de déplacement desdites gouttes dudit échantillon, et au moins un moyen d'aiguillage des gouttes vers au moins un plot d'analyse indépendant, **caractérisé en ce que** ledit moyen (301) de déplacement, comprend au moins un plot conducteur, recouvert d'une couche partiellement mouillante comportant au moins une zone mouillante en vis-à-vis dudit plot conducteur.

2. Dispositif selon la revendication 1, **caractérisé en ce qu'**il comprend une couche isolante insérée entre ledit plot conducteur et ladite couche partiellement mouillante.

3. Dispositif selon l'une quelconque des revendications 1 et 2, **caractérisé en ce que** lesdites zones mouillantes sont fonctionnalisées chimiquement ou biochimiquement.

4. Dispositif selon la revendication 3, **caractérisé en ce que** lesdites zones fonctionnalisées chimiquement ou biochimiquement sont des zones hydrophiles d'interaction avec le liquide déplacé.

5. Dispositif selon l'une quelconque des revendications 1 à 4, **caractérisé en ce que** le moyen (301) de déplacement est de type déplacement par électromouillage sur diélectrique.

6. Dispositif selon l'une quelconque des revendications 1 à 5, **caractérisé en ce qu'**il comprend un moyen d'analyse de type MALDI par désorption-ionisation par rayonnement laser, et/ou de type par détection optique.

7. Système intégré d'analyse microfluidique d'un échantillon de liquide comprenant au moins un moyen (100) de préparation de l'échantillon de liquide, ledit moyen (100) de préparation comprenant un moyen (101) de déplacement pour l'introduction dudit échantillon et de réactifs puis leur migration vers au moins un moyen (200) de traitement chimique ou biochimique de gouttes dudit échantillon de liquide, ledit moyen (200) de traitement comprenant un moyen (201) de déplacement desdites gouttes dudit échantillon puis leur migration vers au moins un moyen (300) d'analyse desdites gouttes dudit échantillon de liquide, ledit moyen (300) d'analyse étant un moyen d'analyse par désorption par rayonnement laser et comprenant d'une part un moyen (301) de déplacement desdites gouttes dudit échantillon et d'autre part au moins un moyen d'aiguillage des gouttes vers des plots d'analyse indépendants, **caractérisé en ce que** au moins un desdits moyens (101,201,301) de déplacement comprend au moins un plot conducteur, recouvert d'une couche partiellement mouillante comportant au moins une zone mouillante en vis-à-vis dudit plot conducteur.

8. Système selon la revendication 7, **caractérisé en ce que** ledit moyen (100) de préparation de l'échantillon de liquide comprend au moins un quai de chargement de liquide.

9. Système selon l'une quelconque des revendications 7 et 8, **caractérisé en ce que** ledit moyen (100) de préparation comprend au moins une zone (102) pour le dépôt de liquide.

10. Système selon l'une quelconque des revendications 7 à 9, **caractérisé en ce qu'**il comprend une couche isolante insérée entre ledit plot conducteur et ladite couche partiellement mouillante.

11. Système selon l'une quelconque des revendications 7 à 10, **caractérisé en ce que** ladite zone mouillante est fonctionnalisée chimiquement ou biochimiquement.

12. Système selon la revendication 11, **caractérisé en ce que** ladite zone fonctionnalisée chimiquement ou biochimiquement est une zone hydrophile d'interaction avec le liquide déplacé

13. Système selon l'une quelconque des revendications 7 à 12, **caractérisé en ce que** ledit moyen (201) de déplacement dudit moyen (200) de traitement chimique ou biochimique comprend deux substrats en vis-à-vis, et/ou au moins un moyen de fractionnement d'une goutte en plusieurs, et/ou au moins un moyen d'élimination des réactifs en excès ou usagers.

14. Système selon l'une quelconque des revendications 7 à 13, **caractérisé en ce que** au moins un desdits moyens (101, 201, 301) de déplacement est de type déplacement par électromouillage sur diélectrique.

15. Système selon l'une quelconque des revendications 7 à 14, **caractérisé en ce que** le moyen (300) d'analyse comprend un moyen d'analyse de type MALDI par désorption-ionisation par rayonnement laser, et/ou de type par détection optique.

## Claims

1. A device (300) for laser radiation desorption analysis of a liquid sample comprising drops, including means (301) for moving the said drops of the said sample, and at least one means for routing the drops to at least one independent analysis pad, **characterised in that** the said moving means (301), includes at least one conducting pad, covered by a partially wetting layer that includes at least one wetting zone opposite to the said conducting pad.

2. A device according to claim 1, **characterised in that** it includes an insulating layer inserted between the said conducting pad and the said partially wetting layer.

3. A device according to either of claims 1 and 2, **characterised in that** the said wetting zones are functionalised chemically or biochemically.

4. A device according to claim 3, **characterised in that** the said chemically or biochemically functionalised zones are hydrophilic zones of interaction with the moved liquid.

5. A device according to any of claims 1 to 4,
**characterised in that** the moving means (301) is of the movement by electrowetting on dielectric type.

6. A device according to any of claims 1 to 5,
**characterised in that** it includes an analysis means of the MALDI type by laser radiation desorption-ionisation, and/or of the optical detection type.

7. An integrated system for the microfluidic analysis of a liquid sample that includes at least one means (100) for preparing the liquid sample, where the said preparation means (100) includes a moving means (101) for the introduction of the said sample and of reagents, and then their migration, to at least one means (200) for the chemical or biochemical treatment of drops of the said liquid sample, with the said treatment means (200) including means (201) for moving the said drops of the said sample and then their migration to at least one means (300) for analysis of the said drops of the said liquid sample, with the said analysis means (300) being an analysis means by laser radiation desorption and including firstly means (301) for moving the said drops of the said sample, and secondly at least one means for routing the drops to independent analysis pads, **characterised in that** at least one of the said moving meanss (101, 201, 301) includes at least one conducting pad covered by a partially wetting layer that includes at least one wetting zone opposite to the said conducting pad.

8. A system according to claim 7, **characterised in that** the said means (100) for preparing the liquid sample includes at least one liquid loading dock.

9. A system according to either of claims 7 and 8, **characterised in that** the said preparation means (100) includes at least one zone (102) for the deposition of liquid.

10. A system according to either of claims 7 to 9, **characterised in that** it includes an insulating layer inserted between the said conducting pad and the said partially wetting layer.

11. A system according to any of claims 7 to 10, **characterised in that** the said wetting zone is functionalised chemically or biochemically.

12. A system according to claim 11, **characterised in that** the chemically or biochemically functionalised zone is a hydrophilic zone of interaction with the moved liquid.

13. A system according to any of claims 7 to 12, **characterised in that** the said means (201) for moving in the said chemical or biochemical treatment means (200) includes two substrates opposite to each other, and/or at least one means for fractionating one drop in several, and/or at least one means for removing excess or exhausted reagents.

14. A system according to any of claims 7 to 13, **characterised in that** at least one of the said moving means (101, 201, 301) is of the movement by electrowetting on dielectric type.

15. A system according to any of claims 7 to 14, **characterised in that** the analysis means (300) includes an analysis means of the MALDI type by laser radiation desorption-ionisation, and/or of the optical detection type.

## Patentansprüche

1. Vorrichtung (300) zur Analyse mittels Laser-Desorption einer Tropfen enthaltenden flüssigen Probe, umfassend ein Mittel (301) zum Bewegen der Tropfen der Probe sowie wenigstens ein Mittel zum Leiten der Tropfen zu wenigstens einer unabhängigen Analysefläche, **dadurch gekennzeichnet, daß** das Bewegungsmittel (301) wenigstens eine leitende Fläche umfaßt, welche mit einer teilbenetzenden Schicht überzogen ist, die wenigstens einen benetzenden Bereich gegenüber der leitenden Fläche aufweist.

2. Vorrichtung nach Anspruch 1, **dadurch gekennzeichnet, daß** sie eine Isolierschicht aufweist, die zwischen der leitenden Fläche und der teilbenetzenden Schicht eingefügt ist.

3. Vorrichtung nach irgendeinem der Ansprüche 1 und 2, **dadurch gekennzeichnet, daß** die benetzenden Bereiche chemisch oder biochemisch funktionalisiert sind.

4. Vorrichtung nach Anspruch 3, **dadurch gekennzeichnet, daß** die chemisch oder biochemisch funktionalisierten Bereiche hydrophile Bereiche zur Wechselwirkung mit der bewegten Flüssigkeit sind.

5. Vorrichtung nach irgendeinem der Ansprüche 1 bis 4, **dadurch gekennzeichnet, daß** das Bewegungsmittel (301) von der Art Bewegen mittels EWOD ist.

6. Vorrichtung nach irgendeinem der Ansprüche 1 bis 5, **dadurch gekennzeichnet, daß** sie ein Analysemittel vom Typ MALDI mittels Laser-Desorption/Ionisation und/oder vom Typ mittels optischer Detektion aufweist.

7. Integriertes System zur mikrofluidischen Analyse einer Flüssigkeitsprobe, das wenigstens ein Mittel (100) zum Präparieren der Flüssigkeitsprobe umfaßt, wobei das Präparationsmittel (100) ein Bewegungsmittel (101) für das Einführen der Probe und von Reagenzien, anschließend deren Migration zu wenigstens einem Mittel (200) zur chemischen oder biochemischen Behandlung von Tropfen der Flüssigkeitsprobe umfaßt, wobei das Behandlungsmittel (200) ein Mittel (201) für das Bewegen der Tropfen der Probe, anschließend deren Migration zu wenigstens einem Mittel (300) zur Analyse der Tropfen der Flüssigkeitsprobe umfaßt, wobei das Analysemittel (300) ein Mittel zur Analyse mittels Laser-Desorption ist und einerseits ein Mittel (301) zum Bewegen der Tropfen der Probe und andererseits wenigstens ein Mittel zum Leiten der Tropfen zu unabhängigen Analyseflächen umfaßt, **dadurch gekennzeichnet, daß** wenigstens eines der Bewegungsmittel (101, 201, 301) wenigstens eine leitende Fläche aufweist, welche mit einer teilbenetzenden Schicht überzogen ist, die wenigstens einen benetzenden Bereich gegenüber der leitenden Fläche aufweist.

8. System nach Anspruch 7, **dadurch gekennzeichnet, daß** das Mittel (100) zum Präparieren der Flüssigkeitsprobe wenigstens eine Flüssigkeitsladerampe aufweist.

9. System nach irgendeinem der Ansprüche 7 und 8, **dadurch gekennzeichnet, daß** das Präparationsmittel (100) wenigstens einen Bereich (102) für das Abscheiden von Flüssigkeit aufweist.

10. System nach irgendeinem der Ansprüche 7 bis 9, **dadurch gekennzeichnet, daß** es eine Isolierschicht aufweist, die zwischen der leitenden Fläche und der teilbenetzenden Schicht eingefügt ist.

11. System nach irgendeinem der Ansprüche 7 bis 10, **dadurch gekennzeichnet, daß** der benetzende Bereich chemisch oder biochemisch funktionalisiert ist.

12. System nach Anspruch 11, **dadurch gekennzeichnet, daß** der chemisch oder biochemisch funktionalisierte Bereich ein hydrophiler Bereich zur Wechselwirkung mit der bewegten Flüssigkeit ist.

13. System nach irgendeinem der Ansprüche 7 bis 12, **dadurch gekennzeichnet, daß** das Bewegungsmittel (201) des Mittels (200) zur chemischen oder biochemischen Behandlung zwei einander gegenüberliegende Substrate und/oder wenigstens ein Mittel zum Spalten eines Tropfens in mehrere Tropfen und/oder wenigstens ein Mittel zum Entfernen der überschüssigen oder gebrauchten Reagenzien aufweist.

14. System nach irgendeinem der Ansprüche 7 bis 13, **dadurch gekennzeichnet, daß** wenigstens eines der Bewegungsmittel (101, 201, 301) von der Art Bewegen mittels EWOD ist.

15. System nach irgendeinem der Ansprüche 7 bis 14, **dadurch gekennzeichnet, daß** das Analysemittel (300) ein Analysemittel vom Typ MALDI mittels Laser-Desorption/lonisation und/oder vom Typ mittels optischer Detektion aufweist
